# EUROPÄISCHE PATENTSCHRIFT

(11) **EP 4 327 449 B1**
(45) Veröffentlichungstag und Bekanntmachung des Hinweises auf die Patenterteilung: **11.11.2026**
(21) Anmeldenummer: 22728188.8
(22) Anmeldetag: 09.05.2022
(51) Int. Cl.: H02P 13/06, H02J 3/18, H01F 29/02

(54) **VERFAHREN UND SYSTEM ZUM BETRIEB EINES REGELTRANSFORMATORS**
METHOD AND SYSTEM FOR OPERATING A CONTROL TRANSFORMER
PROCÉDÉ ET SYSTÈME POUR FAIRE FONCTIONNER UN TRANSFORMATEUR DE COMMANDE

(30) Priorität: 28.05.2021 DE 102021113821
(43) Veröffentlichungstag der Anmeldung: 28.02.2024
(73) Patentinhaber: Reinhausen GmbH, 93059 Regensburg (DE)
(72) Erfinder: HAMMER, Christian, 93059 Regensburg (DE); BIERINGER, Alfred, 94333 Geiselhöring (DE); VIELHAUER, Armin, 93055 Regensburg (DE)
(86) Internationale Anmeldenummer: PCT/EP2022/062405
(87) Internationale Veröffentlichungsnummer: WO 2022/248197

(56) Entgegenhaltungen:
- CN-A- 109 378 200
- DE-A1- 102015 225 314

## Beschreibung

Die Erfindung betrifft ein Verfahren zum Betrieb eines Regeltransformators zur Kopplung von zwei elektrischen Energienetzen und ein System zum Betrieb eines Regeltransformators zur Kopplung von zwei elektrischen Energienetzen.

Ein elektrisches Energienetz kann beispielsweise ein Verbundnetz, ein Energieverbundnetz, ein Stromnetz, ein Stromverbundnetz, ein Elektroenergienetz, ein Energieversorgungsnetz, ein Stromversorgungnetz oder ein Elektrizitätsnetz sein.

Ein elektrisches Energienetz kann beispielsweise die Funktion eines Übertragungsnetzes, eines Verteilnetzes, eines Mittelspannungsnetztes, eines Niederspannungsnetzes oder eines Einspeisenetzes einnehmen und dementsprechend bei Höchstspannung, Hochspannung, Mittelspannung oder Niederspannung Energie übertragen.

Regeltransformatoren sind regelbare Transformatoren, die das Übersetzungsverhältnis zwischen ihrer Oberspannungsseite, z. B. ein mit 380 kV betriebenes Übertragungsnetz, und ihrer Unterspannungsseite, z. B. ein mit 30 kV betriebenes Mittelspannungsnetz, verändern. Dadurch können Spannungsschwankungen, die infolge von Belastungsänderungen im Energienetz oder durch Energieeinspeisung von beispielsweise erneuerbaren Energieanlagen entstehen, vermieden oder ausgeglichen werden.

Bekannte Regeltransformatoren sind hierfür auf ihrer Oberspannungsseite mit einem Laststufenschalter ausgerüstet, der zur unterbrechungslosen Umschaltung zwischen Wicklungsanzapfungen einer Regelwicklung des Transformators ausgebildet ist.

Größere Photovoltaik-(PV-)Parks weisen in der Regel mehrere Wechselrichter auf, die über eine Vielzahl von Verteiltransformatoren, beispielsweise über eine 33 kV-Sammelschiene, an ein Einspeise- oder an ein Mittelspannungsnetz angeschlossen sind. Das Einspeise- oder Mittelspannungsnetz wiederum ist über einen Regeltransformator an das Verteilnetz oder das Übertragungsnetz angebunden. Zur Steuerung der Energiezufuhr und zum Ausgleich von Spannungsschwankungen weist der Regeltransformator üblicherweise einen Laststufenschalter auf der Oberspannungsseite auf.

Zwischen Sonnenuntergang und Sonnenaufgang wird durch den PV-Park keine elektrische Energie erzeugt und demnach auch nicht in das angeschlossene Netz eingespeist. Stattdessen entstehen Verluste, bedingt durch die leerlaufenden Verteiltransformatoren und die ladestromführenden Kabelstrecken im PV-Park, welche dann Energie vom Netz beziehen, anstatt einzuspeisen.

Eine bekannte Methode zur Vermeidung dieser Verluste ist den PV-Park nachts von dem angeschlossenen Energienetz zu trennen. Hierfür werden bekanntermaßen Leistungsschalter eingesetzt, die in die Verbindung zwischen dem PV-Park bzw. der Sammelschiene, an die der PV-Park angeschlossen ist, und dem Übertragungsnetz geschaltet werden und die Verbindung bei Bedarf unterbrechen können. Das Abtrennen der Sammelschiene durch den Leistungsschalter hat jedoch den Nachteil, dass dieser durch die häufigen Schaltvorgänge schnell verschleißt und bei jeder Einschaltung ein sog. Inrush der Verteiltransformatoren eintritt. Dabei fließt ein Einschaltstrom, der ein Vielfaches des später fließenden Nennstromes betragen und folglich die Wicklungen und andere Komponenten der Verteiltransformatoren beschädigen kann.

CN 109 378 200 A beschreibt einen Transformator für Photovoltaikanwendungen mit einer Schaltvorrichtung zur Last- und Spannungsregelung. Im Leerlaufbetrieb wird die Lastkapazität und die Spannungsregelung des Transformators so angepasst, dass der Transformator mit einer kleinen Kapazität betrieben wird, um Leerlaufverluste zu vermeiden.

DE 10 2015 225314 A1 beschreibt einen regelbaren Ortsnetztransformator mit einer Oberspannungsspule auf einer Oberspannungsseite und einer Unterspannungsspule auf einer Unterspannungsseite. Ein erster Laststufenschalter ist zur Umschaltung zwischen verschiedenen Windungszahlen der Unterspannungsspule und ein zweiter Laststufenschalter ist zur Umschaltung zwischen verschiedenen Windungszahlen der Oberspannungsspule ausgestaltet.

Es ist daher eine Aufgabe der vorliegenden Erfindung ein verbessertes Konzept für den Betrieb eines Regeltransformators zur Kopplung von zwei elektrischen Energienetzen anzugeben, mit dem Verluste bedingt durch den Leerlauf einer erneuerbaren Energieanlage weitestgehend reduziert werden.

Diese Aufgabe wird durch ein verbessertes Konzept in Form eines Verfahrens und eines Systems gemäß den unabhängigen und nebengeordneten Ansprüchen gelöst. Weitere Ausführungsformen sind Gegenstand der abhängigen Ansprüche.

Gemäß einem ersten Aspekt des verbesserten Konzeptes wird ein Verfahren mit den Merkmalen des Anspruchs 1 angegeben. Vorgesehen ist also ein Verfahren zum Betrieb eines Regeltransformators zur Kopplung von zwei elektrischen Energienetzen mit einem System zur Ausführung des Verfahrens umfassend einen Regeltransformator mit wenigstens einer ersten Regelwicklung auf einer Oberspannungsseite und mit wenigstens einer zweiten Regelwicklung auf einer Unterspannungsseite, einen ersten Laststufenschalter zur Umschaltung zwischen wenigstens zwei Wicklungsanzapfungen der ersten Regelwicklung, einen zweiten Laststufenschalter zur Umschaltung zwischen wenigstens zwei Wicklungsanzapfungen der zweiten Regelwicklung und eine Ableitung, die an der Unterspannungsseite angeschlossen ist. Das Verfahren weist die folgenden Schritte auf: In einem ersten Schritt wir ein erstes Signal erfasst, das einen bevorstehenden Übergang von einem ersten Betriebszustand in einen zweiten Betriebszustand auf der Unterspannungsseite des Regeltransformators anzeigt. In einem zweiten Schritt wird der zweite Laststufenschalter derart betätigt, dass der zweite Laststufenschalter stufenweise von einer ersten Betriebsposition, in der die an der Ableitung anliegende Spannung vorzugsweise einen maximalen Wert einnimmt, in eine zweite Betriebsposition, in der die an der Ableitung anliegende Spannung einen minimalen Wert nahe Null einnimmt, umgeschaltet wird.

Gemäß dem ersten Aspekt des verbesserten Konzeptes wird außerdem ein Verfahren mit den Merkmalen des Anspruchs 2 angegeben. Vorgesehen ist also ein Verfahren zum Betrieb eines Regeltransformators zur Kopplung von zwei elektrischen Energienetzen mit einem System zur Ausführung des Verfahrens umfassend einen Regeltransformator mit wenigstens einer ersten Regelwicklung auf einer Oberspannungsseite und mit wenigstens einer zweiten Regelwicklung auf einer Unterspannungsseite, einen ersten Laststufenschalter zur Umschaltung zwischen wenigstens zwei Wicklungsanzapfung der ersten Regelwicklung, einen zweiten Laststufenschalter zur Umschaltung zwischen wenigstens zwei Wicklungsanzapfungen der zweiten Regelwicklung, eine Ableitung, die an der Unterspannungsseite angeschlossen ist, und außerdem ein Schaltelement, das parallel zu dem zweiten Laststufenschalter an der Unterspannungsseite angeordnet ist und eine geöffnete Position und eine geschlossene Position einnehmen kann. Das Verfahren weist die folgenden Schritte auf: In einem ersten Schritt wird ein erstes Signal erfasst, das einen bevorstehenden Übergang von einem ersten Betriebszustand in einen zweiten Betriebszustand auf der Unterspannungsseite des Regeltransformators anzeigt. In einem nächsten Schritt wird der zweite Laststufenschalter derart betätigt, dass der zweite Laststufenschalter von einer dritten Betriebsposition in eine erste Betriebsposition, in der die an der Ableitung anliegende Spannung vorzugsweise einen maximalen Wert einnimmt, umgeschaltet wird. Daraufhin wird das Schaltelement geöffnet und ein Strom von der Ableitung auf den zweiten Laststufenschalter kommutiert, welcher danach derart betätigt wird, dass der zweite Laststufenstufenschalter von der ersten Betriebsposition in eine zweite Betriebsposition, in der die an der Ableitung anliegende Spannung einen minimalen Wert nahe Null einnimmt, umgeschaltet wird.

Gemäß dem verbesserten Konzept können also auf der Unterspannungsseite des Regeltransformators ein erster und ein zweiter Betriebszustand auftreten.

In dem ersten Betriebszustand befindet sich ein auf der Unterspannungsseite des Regeltransformators angeordnetes elektrisches Energienetz in einem Zustand, in dem es in das auf der Oberspannungsseite des Regeltransformators angeordnete elektrische Energienetz Energie einspeist.

In dem zweiten Betriebszustand befindet sich ein auf der Unterspannungsseite des Regeltransformators angeordnetes elektrisches Energienetz in einem Zustand, in dem es in das auf der Oberspannungsseite des Regeltransformators angeordnete elektrische Energienetz keine Energie einspeist oder sogar Energie bezieht.

Gemäß einer bevorzugten Ausführungsform des verbesserten Konzepts ist auf der Unterspannungsseite über die Ableitung eine erneuerbare Energieanlage angeordnet, beispielsweise ein PV-Park oder eine Windkraftanlage, die sich im ersten Betriebszustand in einem energieeinspeisenden Zustand und im zweiten Betriebszustand im Leerlauf, das heißt in einem nicht-einspeisenden Zustand befindet.

Gemäß einer bevorzugten Ausführungsform des verbesserten Konzepts zeigt das erste Signal an, dass bei einer auf der Unterspannungsseite angeordneten erneuerbare Energieanlage ein Übergang von einem einspeisenden Zustand in einen nicht-einspeisenden Zustand bevorsteht.

Gemäß einer bevorzugten Ausführungsform des verbesserten Konzepts befindet sich der zweite Laststufenschalter bei der ersten Betriebsposition in einer Endposition, in der die an der Ableitung anliegenden Spannung einen maximalen Wert einnimmt.

Gemäß einer bevorzugten Ausführungsform des verbesserten Konzepts befindet sich der zweite Laststufenschalter bei der zweiten Betriebsposition in einer Endposition, in der die an der Ableitung anliegenden Spannung einen minimalen Wert nahe Null einnimmt.

Gemäß einer bevorzugten Ausführungsform des verbesserten Konzepts befindet sich der zweite Laststufenschalter bei der dritten Betriebsposition in einer Leerlaufposition, in der keine Spannung an der Ableitung anliegt.

Das Schaltelement kann auf beliebige Art und Weise ausgebildet sein. Bevorzugt ist das Schaltelement als Baugruppe des zweiten Laststufenschalters, besonders bevorzugt als Vorwähler des zweiten Laststufenschalters ausgebildet. Ebenso kann das Schaltelement als eigene Baugruppe ausgebildet sein und beispielsweise als Leistungsschalter oder - Trennschalter ausgebildet sein.

Gemäß einer bevorzugten Ausführungsform des Verfahrens weist das Verfahren die folgenden weiteren Schritte auf: In einem nächsten Schritt wird ein zweites Signal, das einen bevorstehenden Übergang von dem zweiten Betriebszustand in den ersten Betriebszustand auf der Unterspannungsseite des Regeltransformators anzeigt, erfasst, und daraufhin in einem weiteren Schritt der zweite Laststufenschalter derart betätigt, dass der Laststufenschalter von der zweiten Betriebsposition stufenweise zurück in die erste Betriebsposition umgeschaltet wird.

Gemäß einer bevorzugten Ausführungsform des verbesserten Konzepts zeigt das zweite Signal an, dass bei einer auf der Unterspannungsseite angeordneten erneuerbare Energieanlage ein Übergang von einem nicht-einspeisenden Zustand in einen einspeisenden Zustand bevorsteht.

Gemäß einer weiteren bevorzugten Ausführungsform des Verfahrens wird in einem weiteren Schritt das Schaltelement geschlossen und daraufhin der Laststufenschalter derart betätigt, dass der zweite Laststufenschalter von der ersten Betriebsposition zurück in die dritte Betriebsposition umgeschaltet wird.

Erfindungsgemäß wird wenigstens eine Kenngröße erfasst, die maßgeblich ist für eine Änderung des Betriebszustandes auf der Unterspannungsseite des Regeltransformators.

Bevorzugte Kenngrößen, die maßgeblich sind für eine Änderung des Betriebszustandes auf der Unterspannungsseite, sind elektrische Kenngrößen, die an der Ableitung erfasst werden können wie Strom, Spannung, Leistung, Blindleistung oder die Phasenverschiebung. Weitere, bevorzugte Kenngröße sind beispielsweise eine vorbestimmte Zeitspanne oder eine tageslichtabhängige Kenngröße oder eine windgeschwindigkeitsabhängige Kenngröße.

Des Weiteren wird das erste Signal dann ausgegeben, wenn wenigstens ein Kriterium für den Übergang von dem ersten in den zweiten Betriebszustand erfüllt ist, und das zweite Signal dann, wenn wenigstens ein Kriterium für den Übergang von dem zweiten in den ersten Betriebszustand erfüllt ist.

Bevorzugte Kriterien für den Übergang von dem ersten in den zweiten Betriebszustand und umgekehrt sind ein bestimmter Strom, der über die Ableitung fließt, eine bestimmte Spannung, die an der Ableitung anliegt, oder daraus ableitbare Größen wie eine bestimmte Leistung, Blindleistung oder Phasenverschiebung. Ein weiteres Kriterium ist beispielsweise eine vorbestimmte Uhrzeit oder eine vorbestimmte Zeitspanne, die abgelaufen ist. Ein ebenso mögliches Kriterium ist eine bestimmte Lichteinstrahlung bzw. Helligkeit.

Gemäß einem zweiten Aspekt des verbesserten Konzeptes wird außerdem ein System mit den Merkmalen des Anspruchs 6 angegeben.

Die Merkmale des Systems korrespondieren zu den Schritten des Verfahrens gemäß dem ersten Aspekt der Erfindung. Für das System gemäß dem zweiten Aspekt der Erfindung wird deshalb auf die vorteilhaften Erläuterungen, bevorzugten Merkmale, technischen Effekte und/oder Vorteile in analoger Weise Bezug genommen, wie sie für das Verfahren gemäß dem ersten Aspekt der Erfindung bereits erläutert worden sind. Auf eine Wiederholung wird verzichtet.

Außerdem wird zu den im Folgenden wiedergegebenen, vorteilhaften Ausgestaltungen des Systems auf die Erläuterungen, Merkmale, Verfahrensschritte, technischen Effekte und Vorteile in analoger Weise Bezug genommen, wie sie für die entsprechenden Ausführungsformen des Verfahrens bereits erläutert worden sind. Auch hier wird auf eine analoge Wiederholung verzichtet.

Vorgesehen ist ein System zum Betrieb eines Regeltransformators zur Kopplung von zwei elektrischen Energienetzen. Das System umfasst einen Regeltransformator mit wenigstens einer ersten Regelwicklung auf einer Oberspannungsseite und mit wenigstens einer zweiten Regelwicklung auf einer Unterspannungsseite, einen ersten Laststufenschalter zur Umschaltung zwischen wenigstens zwei Wicklungsanzapfungen der ersten Regelwicklung, einen zweiten Laststufenschalter zur Umschaltung zwischen wenigstens zwei Wicklungsanzapfungen der zweiten Regelwicklung, eine Ableitung, die an der Unterspannungsseite des Regeltransformators angeschlossen ist, und eine Steuereinheit. Die Steuereinheit ist dazu ausgebildet, ein erstes Signal zu erfassen, das einen Übergang von einem ersten Betriebszustand in einen zweiten Betriebszustand auf der Unterspannungsseite des Regeltransformators anzeigt, und den zweiten Laststufenschalters in Abhängigkeit von dem ersten Signal derart zu betätigen, dass der zweite Laststufenschalter stufenweise von einer ersten Betriebsposition, in der die an der Ableitung anliegende Spannung vorzugsweise einen maximalen Wert einnimmt, in eine zweite Betriebsposition, in der die an der Ableitung anliegende Spannung einen minimalen Wert nahe Null einnimmt, umgeschaltet wird.

Gemäß einer bevorzugten Ausführungsform des Systems umfasst das System außerdem ein Schaltelement, das parallel zu dem zweiten Laststufenschalter an der Unterspannungsseite angeordnet ist und eine geöffnete Position und eine geschlossene Position einnehmen kann. Die Steuereinheit ist gemäß dieser Ausführungsform weiterhin dazu ausgebildet, den zweiten Laststufenschalter in Abhängigkeit von dem ersten Signal derart zu betätigen, dass der zweite Laststufenschalter von einer dritten Betriebsposition, in der sich der Laststufenschalter in einer Leerlaufposition befindet, in eine erste Betriebsposition, in der die an der Ableitung anliegende Spannung einen maximalen Wert einnimmt, umgeschaltet wird, das Schaltelement zu öffnen, sodass ein Strom von der Ableitung auf den zweiten Laststufenschalter kommutiert wird, und den zweiten Laststufenschalters derart zu betätigen, dass der zweite Laststufenstufenschalter von der ersten Betriebsposition in eine zweite Betriebsposition, in der die an der Ableitung anliegende Spannung einen minimalen Wert nahe Null einnimmt, umgeschaltet wird.

Gemäß einer weiteren Ausführungsform ist die Steuereinheit ferner dazu ausgebildet, ein zweites Signal zu erfassen, das einen bevorstehenden Übergang von dem zweiten Betriebszustand in den ersten Betriebszustand auf der Unterspannungsseite des Regeltransformators beschreibt, und den zweiten Laststufenschalter in Abhängigkeit von dem zweiten Signal derart zu betätigen, dass der zweite Laststufenschalter von der zweiten Betriebsposition stufenweise zurück in die erste Betriebsposition umgeschaltet wird.

Gemäß einer weiteren Ausführungsform ist die Steuereinheit außerdem dazu ausgebildet, das Schaltelement zu schließen und den zweiten Laststufenschalters daraufhin derart zu betätigen, dass der zweite Laststufenschalter von der ersten Betriebsposition in die dritte Betriebsposition umgeschaltet wird.

Gemäß einer Ausführungsform ist an der Unterspannungsseite des Regeltransformators über die Ableitung eine erneuerbare Energieanlage angeschlossen, die in dem ersten Betriebszustand auf der Unterspannungsseite des Regeltransformators elektrische Energie erzeugt, d. h. sich in einem energieeinspeisenden Zustand befindet, und in dem zweiten Betriebszustand auf der Unterspannungsseite des Regeltransformators keine elektrische Energie erzeugt, d. h. sich in einem nicht-energieeinspeisenden Zustand befindet.

Die erneuerbare Energieanlage ist beispielsweise ein PV-Park oder ein Windpark.

Gemäß einer bevorzugten Ausführungsform ist an der Unterspannungsseite des Regeltransformators über die Ableitung ein Verbraucher angeschlossen, der in dem ersten Betriebszustand auf der Unterspannungsseite des Regeltransformators Energie bezieht, und in dem zweiten Betriebszustand auf der Unterspannungsseite des Regeltransformators keine Energie bezieht.

Der Verbraucher kann als Industrienetz oder als beliebige, energiebeziehende Komponente im Netz ausgebildet sein. Beispielsweise ist der Verbraucher ein elektrischer Antrieb, eine Auflade-Möglichkeit für Elektrofahrzeuge, beispielsweise eine oder mehrere Schnellladesäulen, oder ein Schiff-Terminal in einem Hafen, zur zeitweisen Stromversorgung der anliegenden Schiffe.

Erfindungsgemäß umfasst das System eine Auswerteeinheit mit wenigstens einem Sensor, der dazu ausgebildet, wenigstens eine Kenngröße zu erfassen, die maßgeblich ist für eine Änderung des Betriebszustandes auf der Unterspannungsseite des Regeltransformators.

Die Auswerteeinheit ist dazu ausgebildet, das erste Signal an die Steuereinheit zu übermitteln, wenn wenigstens ein Kriterium für den Übergang von dem ersten in den zweiten Betriebszustand erfüllt ist, und/oder das zweite Signal an die Steuereinheit zu übermitteln, wenn wenigstens ein Kriterium für den Übergang von dem zweiten in den ersten Betriebszustand erfüllt ist.

Die Auswerteeinheit kann als Bestandteil der Steuereinheit oder als separate Einheit ausgebildet sein.

Der wenigstens eine Sensor kann räumlich an der Auswerteeinheit angeordnet sein und/oder räumlich beabstandet innerhalt des Systems angeordnet sein, beispielsweise an der Ableitung.

Der wenigstens eine Sensor kann als intelligenter Sensor ausgebildet sein, derart dass die Auswerteeinheit und der Sensor eine gemeinsame Einheit bilden, die sowohl die Erfassung der Kenngrößen als auch die Signalaufbereitung und -übermittlung des ersten und zweiten Signals an die Steuereinheit durchführt.

Gemäß einer Ausführungsform sind das erste und/oder das zweite Signal als zeitgesteuerte Signale ausgebildet. Bevorzugt wird das zeitgesteuerte Signal durch eine Zeitschaltuhr oder programmbasiert durch die Steuereinheit, d. h. durch ein auf der Steuereinheit gespeichertes Programm in Abhängigkeit von der Uhrzeit ausgelöst. Die Zeitschaltuhr kann in der Steuereinheit integriert oder separat ausgebildet sein.

Gemäß einer Ausführungsform des Systems umfasst der Regeltransformator eine Tertiärwicklung, die zur eigenständigen Stromversorgung von elektrischen Betriebsmitteln wie Alarmanlagen, Telefonanlagen, Beleuchtungsanlagen oder Sicherheitseinrichtungen einer erneuerbaren Energieanlage unabhängig von dem Betriebszustand auf der Unterspannungsseite des Regeltransformators ausgebildet ist.

Die Sicherung der Stromversorgung von elektrischen Betriebsmitteln aus der Tertiärwicklung unabhängig von dem jeweiligen Betriebszustand auf der Unterspannungsseite des Regeltransformators bedeutet konkret, dass die Stromversorgung der elektrischen Betriebsmittel sichergestellt bleibt, wenn der Übergang von einem ersten Betriebszustand in einen zweiten Betriebszustand auf der Unterspannungsseite erfolgt und die Spannung auf der Unterspannungsseite durch den zweiten Laststufenschalter abgesenkt wird.

Im Folgenden wird das verbesserte Konzept anhand beispielhafter Ausführungsformen unter Bezug auf die Zeichnungen im Detail erklärt. Komponenten, die identisch oder funktionell identisch sind oder einen identischen Effekt haben, können mit identischen Bezugszeichen versehen sein. Identische Komponenten oder Komponenten mit identischer Funktion sind unter Umständen nur bezüglich der Figur erklärt, in der sie zuerst erscheinen. Die Erklärung wird nicht notwendigerweise in den darauffolgenden Figuren wiederholt.

Es zeigen
- Figur 1: eine vorteilhafte Ausführungsform eines Systems gemäß dem verbesserten Konzept in einer schematischen Darstellung,
- Figur 2: eine Detailansicht der vorteilhaften Ausführungsform des Systems aus Figur 1 in einer schematischen Darstellung,
- Figur 3: eine Detailansicht einer weiteren vorteilhafte Ausführungsform des Systems aus Figur 1 in einer schematischen Darstellung,
- Figur 4: eine vorteilhafte Ausführungsform des Verfahrens gemäß dem verbesserten Konzept,
- Figur 5: eine weitere vorteilhafte Ausführungsform des Verfahrens gemäß dem verbesserten Konzept.

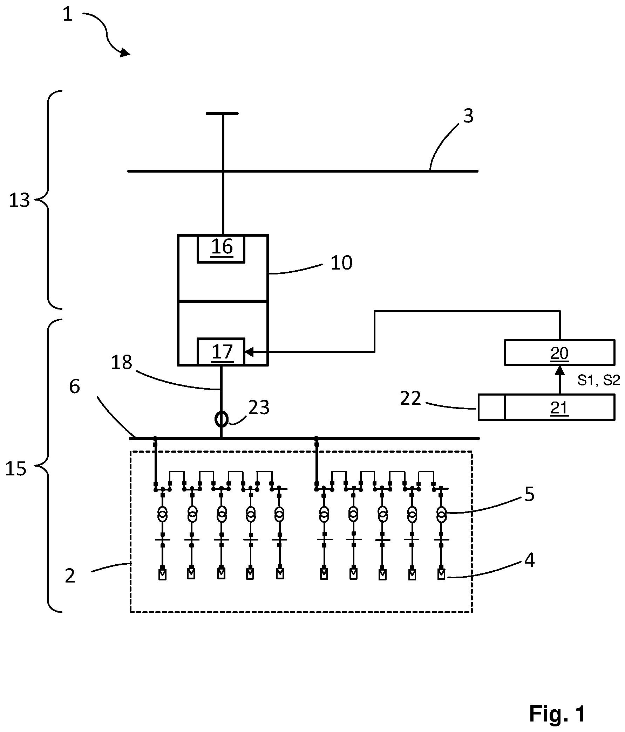

In Figur 1 ist eine vorteilhafte Ausführungsform eines Systems 1 gemäß dem verbesserten Konzept in einer schematischen Darstellung gezeigt. Ein PV-Park 2 mit mehreren Wechselrichtern 4 ist über eine Vielzahl von Verteiltransformatoren 5 an eine 33 kV-Sammelschiene 6 angeschlossen, welche wiederum über einen Regeltransformator 10 an das 380 kV-Übertragungsnetz 3 angebunden ist. Der PV-Park 2 ist demnach auf einer Unterspannungsseite 15 des Regeltransformators 10 angeordnet und speist Energie in das Übertragungsnetz 3 ein, welches auf einer Oberspannungsseite 13 des Regeltransformators 10 angeordnet ist. Der Regeltransformator 10 weist auf der Oberspannungsseite 15 einen ersten Laststufenschalter 16 zur Steuerung der Energiezufuhr und zum Ausgleich von Spannungsschwankungen und auf der Unterspannungsseite 15 einen zweiten Laststufenschalter 17 zur Absenkung der Spannung auf der Unterspannungsseite 15 bei Bedarf, beispielsweise nachts, wenn der PV-Park 2 keine Energie erzeugt, auf. Weiterhin umfassts der Regeltransformator 10 eine Ableitung 18, die an der Unterspannungsseite 15 angeschlossen ist. Der zweite Laststufenschalter 17 wird von einer Steuereinheit 20 betätigt. Die Steuereinheit 20 wiederum betätigt den zweiten Laststufenschalter 17 in Abhängigkeit der Signale S1 und S2, die sie von einer Auswerteeinheit 21 erhält. Für die Erfassung der hierfür relevanten Kenngrößen weist die Auswerteeinheit 21 die Sensoren 22 und 23 auf. Sensor 22 ist hier beispielhaft unmittelbar an der Auswerteeinheit 21 angeordnet und kann beispielsweise als Lichtsensor ausgebildet sein. Sensor 23 ist hier beispielhaft an der Ableitung 18 angeordnet, und ist beispielsweise für die Erfassung eines durch die Ableitung 18 fließenden Stromes ausgebildet.

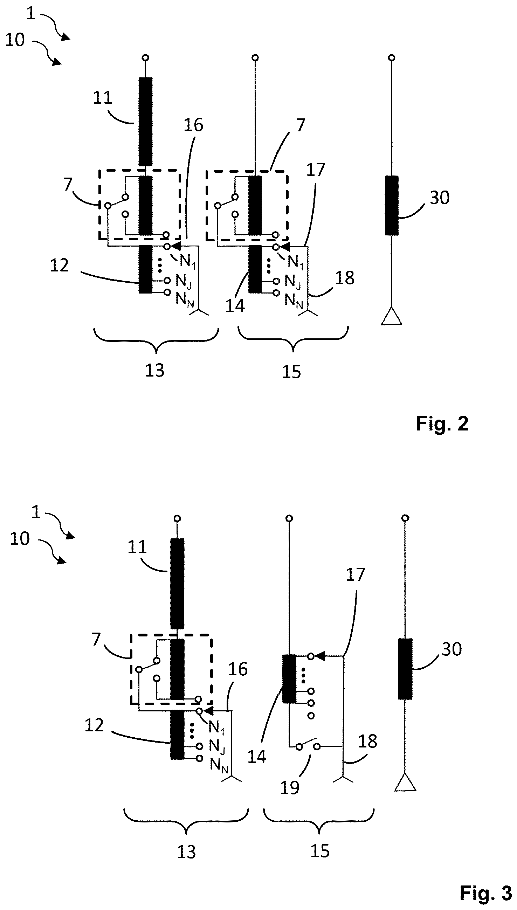

Figur 2 zeigt eine Detailansicht der vorteilhaften Ausführungsform des Systems 1 aus Figur 1 in einer schematischen Darstellung. Der Regeltransformator 10 weist auf seiner Oberspannungsseite 13 eine Stammwicklung 11 und eine Regelwicklung 12 mit Wicklungsanzapfungen N₁, ...N_{J}, ..., N_{N} auf, die von dem ersten Laststufenschalter 16 beschaltet werden. Außerdem weist der Regeltransformator 10 auf seiner Unterspannungsseite 15 eine zweite Regelwicklung 14 mit Wicklungsanzapfungen N₁, ... N_{J}, ..., N_{N} auf, die von dem zweiten Laststufenschalter 17 beschaltet werden. Des Weiteren weist der Regeltransformator 10 eine Tertiärwicklung 30 auf, die zur eigenständigen Stromversorgung von elektrischen Betriebsmitteln wie beispielsweise Alarmanlagen, Telefonanlagen, Beleuchtungsanlagen oder Sicherheitseinrichtungen der PV-Anlage 2 vorgesehen ist.

Gemäß dieser beispielhaften Ausführungsform weisen der erste und der zweite Laststufenschalter 16, 17 jeweils eine zusätzliche, sogenannte Grobstufe 7 auf, über die durch den jeweiligen Laststufenschalter 16, 17 ein Teil der Stammwicklung 11 zu- oder abgeschaltet werden kann.

Figur 3 zeigt eine Detailansicht einer weiteren vorteilhaften Ausführungsform des Systems 1 aus Figur 1 in einer schematischen Darstellung. Bezüglich dem System 1 aus der Figur 3 wird auf die vorangegangenen Erläuterungen zu Figur 2 in analoger Weise Bezug genommen und im Folgenden lediglich auf die Unterschiede und ergänzende Merkmale eingegangen. Gemäß der in Figur 3 gezeigten vorteilhaften Ausführungsform weist das System 1 zusätzlich ein Schaltelement 19 auf, das parallel zum zweiten Laststufenschalter 17 auf der Unterspannungsseite 15 angeordnet ist. In Figur 3 ist das Schaltelement 19 in einer geöffneten Position dargestellt, d. h. der Strom verläuft über den zweiten Laststufenschalter 17.

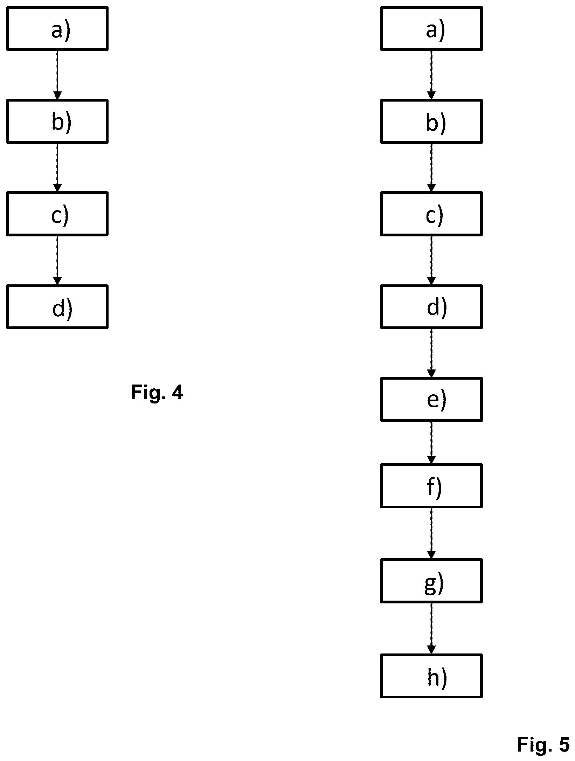

In Figur 4 ist eine vorteilhafte Ausführungsform des Verfahrens gemäß dem verbesserten Konzept in Form eines Ablaufdiagramms dargestellt. Das Verfahren weist die folgenden Schritte auf:
a) Erfassen eines ersten Signals S1, das einen bevorstehenden Übergang von einem ersten Betriebszustand in einen zweiten Betriebszustand auf der Unterspannungsseite 15 des Regeltransformators 10 anzeigt, mittels der Steuereinheit 20,
b) Betätigen des zweiten Laststufenschalters 17 derart, dass der zweite Laststufenschalter 17 von einer ersten Betriebsposition in eine zweite Betriebsposition, in der die an der Ableitung 18 anliegende Spannung einen minimalen Wert nahe Null einnimmt, umgeschaltet wird, mittels der Steuereinheit 20,
c) Erfassen eines zweiten Signals S2, das einen bevorstehenden Übergang von dem zweiten Betriebszustand in den ersten Betriebszustand auf der Unterspannungsseite 17 des Regeltransformators 10 anzeigt, mittels der Steuereinheit 20,
d) Betätigen des zweiten Laststufenschalters 17 derart, dass der zweite Laststufenschalter 17 von der zweiten Betriebsposition zurück in die erste Betriebsposition umgeschaltet wird, mittels der Steuereinheit 20.

Bezüglich des Verfahrens wird auf die vorangegangenen Erläuterungen, bevorzugten Merkmale, Effekte und/oder Vorteile, wie sie für das System 1 zu den Figuren 1 - 3 bereits erläutert worden sind, in analoger Weise Bezug genommen. Auf eine entsprechende Wiederholung wird deshalb verzichtet.

In Figur 5 ist eine weitere vorteilhafte Ausführungsform des Verfahrens gemäß dem verbesserten Konzept in Form eines Ablaufdiagramms dargestellt. Dieses Verfahren wird mit einem System 1 ausgeführt, wie es beispielsweise in der Figur 3 gezeigt ist, und weist die folgenden Schritte auf:
a) Erfassen eines ersten Signals S1, das einen bevorstehenden Übergang von einem ersten Betriebszustand in einen zweiten Betriebszustand auf der Unterspannungsseite 15 des Regeltransformators 10 anzeigt, mittels der Steuereinheit 20,
b) Betätigen des zweiten Laststufenschalters 17 derart, dass der zweite Laststufenschalter 17 von einer dritten Betriebsposition in eine erste Betriebsposition, in der die an der Ableitung 18 anliegende Spannung vorzugsweise einen maximalen Wert einnimmt, umgeschaltet wird, mittels der Steuereinheit 20,
c) Öffnen des Schaltelements 19 und Kommutieren eines Stromes von der Ableitung auf den zweiten Laststufenschalter 17, mittels der Steuereinheit 20,
d) Betätigen des zweiten Laststufenschalters 17 derart, dass der zweite Laststufenstufenschalter 17 von der ersten Betriebsposition in eine zweite Betriebsposition, in der die an der Ableitung 18 anliegende Spannung einen minimalen Wert nahe Null einnimmt, umgeschaltet wird, mittels der Steuereinheit 20,
e) Erfassen eines zweiten Signals S2, das einen bevorstehenden Übergang von dem zweiten Betriebszustand in den ersten Betriebszustand auf der Unterspannungsseite 17 des Regeltransformators 10 anzeigt, mittels der Steuereinheit 20,
f) Betätigen des zweiten Laststufenschalters 17 derart, dass der zweite Laststufenschalter 17 von der zweiten Betriebsposition zurück in die erste Betriebsposition umgeschaltet wird, mittels der Steuereinheit 20,
g) Schließen des Schaltelements (19) mittels der Steuereinheit 20,
h) Betätigen des zweiten Laststufenschalters 17 derart, dass der zweite Laststufenschalter 17 von der ersten Betriebsposition in die dritte Betriebsposition umgeschaltet wird, mittels der Steuereinheit 20.

Auch bezüglich dieses Verfahrens wird auf die vorangegangenen Erläuterungen, bevorzugten Merkmale, Effekte und/oder Vorteile, wie sie für das System 1 zu den Figuren 1 - 3 bereits erläutert worden sind, in analoger Weise Bezug genommen. Auf eine entsprechende Wiederholung wird deshalb verzichtet.

### BEZUGSZEICHEN

- 1: System
- 2: PV-Park
- 3: Übertragungsnetz
- 4: Wechselrichter
- 5: Verteiltransfomator
- 6: Sammelschiene
- 7: Grobstufe
- 10: Regeltransformator
- 11: Stammwicklung
- 12: erste Regelwicklung
- 13: Oberspannungsseite von 10
- 14: zweite Regelwicklung
- 15: Unterspannungsseite von 10
- 16: erster Laststufenschalter
- 17: zweiter Laststufenschalter
- 18: Ableitung
- 19: Schaltelement
- 20: Steuereinheit
- 21: Auswerteeinheit
- 22: Sensor

- S1: erstes Signal
- S2: zweites Signal
- N₁, ...N_{J}, ..., N_{N}: Wicklungsanzapfungen

## Patentansprüche

1. Verfahren zum Betrieb eines Regeltransformators (10) zur Kopplung von zwei elektrischen Energienetzen (2, 3), mit einem System (1) umfassend
- einen Regeltransformator (10) mit wenigstens einer ersten Regelwicklung (12) auf einer Oberspannungsseite (13) und mit wenigstens einer zweiten Regelwicklung (14) auf einer Unterspannungsseite (15),
- einen ersten Laststufenschalter (16) zur Umschaltung zwischen wenigstens zwei Wicklungsanzapfungen (N₁, ...N_{J}, ..., N_{N}) der ersten Regelwicklung (12),
- einen zweiten Laststufenschalter (17) zur Umschaltung zwischen wenigstens zwei Wicklungsanzapfungen (N₁, ...N_{J}, ..., N_{N}) der zweiten Regelwicklung (14),
- eine Ableitung (18), die an der Unterspannungsseite (15) angeschlossen ist,
wobei das Verfahren folgende Schritte aufweist:
- Erfassen wenigstens einer Kenngröße, die maßgeblich ist für eine Änderung eines Betriebszustandes auf der Unterspannungsseite (13) des Regeltransformators (10),
- Erfassen eines ersten Signals (S1), das einen bevorstehenden Übergang von einem ersten Betriebszustand in einen zweiten Betriebszustand auf der Unterspannungsseite (15) des Regeltransformators (10) anzeigt, wobei das erste Signal (S1) ausgegeben wird, wenn wenigstens ein Kriterium für den Übergang von dem ersten in den zweiten Betriebszustand erfüllt ist,
das Verfahren ist **gekennzeichnet durch**
- Betätigen des zweiten Laststufenschalters (17) derart, dass der zweite Laststufenschalter (17) von einer ersten Betriebsposition in eine zweite Betriebsposition, in der die an der Ableitung (18) anliegende Spannung einen minimalen Wert nahe Null einnimmt, umgeschaltet wird.

2. Verfahren zum Betrieb eines Regeltransformators (10) zur Kopplung von zwei elektrischen Energienetzen (2), mit einem System (1) umfassend
- einen Regeltransformator (10) mit wenigstens einer ersten Regelwicklung (12) auf einer Oberspannungsseite (13) und mit wenigstens einer zweiten Regelwicklung (14) auf einer Unterspannungsseite (15),
- einen ersten Laststufenschalter (16) zur Umschaltung zwischen wenigstens zwei Wicklungsanzapfungen (N₁, ...N_{J}, ..., N_{N}) der ersten Regelwicklung (12),
- einen zweiten Laststufenschalter (17) zur Umschaltung zwischen wenigstens zwei Wicklungsanzapfungen (N₁, ...N_{J}, ..., N_{N}) der zweiten Regelwicklung (14),
- eine Ableitung (18), die an der Unterspannungsseite (15) angeschlossen ist,
- ein Schaltelement (19), das parallel zu dem zweiten Laststufenschalter (17) an der Unterspannungsseite (15) angeordnet ist und eine geöffnete Position und eine geschlossene Position einnehmen kann,
wobei das Verfahren die folgenden Schritte aufweist:
- Erfassen wenigstens einer Kenngröße, die maßgeblich ist für eine Änderung eines Betriebszustandes auf der Unterspannungsseite (13) des Regeltransformators (10),
- Erfassen eines ersten Signals (S1), das einen bevorstehenden Übergang von einem ersten Betriebszustand in einen zweiten Betriebszustand auf der Unterspannungsseite (15) des Regeltransformators (10) anzeigt, wobei das erste Signal (S1) ausgegeben wird, wenn wenigstens ein Kriterium für den Übergang von dem ersten in den zweiten Betriebszustand erfüllt ist,
- Betätigen des zweiten Laststufenschalters (17) derart, dass der zweite Laststufenschalter (17) von einer dritten Betriebsposition in eine erste Betriebsposition, in der die an der Ableitung (18) anliegende Spannung vorzugsweise einen maximalen Wert einnimmt, umgeschaltet wird,
- Öffnen des Schaltelements (19) und Kommutieren eines Stromes von der Ableitung auf den zweiten Laststufenschalter (17),
- Betätigen des zweiten Laststufenschalters (17) derart, dass der zweite Laststufenstufenschalter (17) von der ersten Betriebsposition in eine zweite Betriebsposition, in der die an der Ableitung (18) anliegende Spannung einen minimalen Wert nahe Null einnimmt, umgeschaltet wird.

3. Verfahren nach Anspruch 1 oder 2, wobei das Verfahren die folgenden weiteren Schritte umfasst:
- Erfassen eines zweiten Signals (S2), das einen bevorstehenden Übergang von dem zweiten Betriebszustand in den ersten Betriebszustand auf der Unterspannungsseite (17) des Regeltransformators (10) anzeigt,
- Betätigen des zweiten Laststufenschalters (17) derart, dass der zweite Laststufenschalter (17) von der zweiten Betriebsposition zurück in die erste Betriebsposition umgeschaltet wird.

4. Verfahren nach Anspruch 2 und 3, wobei das Verfahren die folgenden weiteren Schritte umfasst:
- Schließen des Schaltelements (19),
- Betätigen des zweiten Laststufenschalters (17) derart, dass der zweite Laststufenschalter (17) von der ersten Betriebsposition in die dritte Betriebsposition umgeschaltet wird.

5. Verfahren nach einem der vorherigen Ansprüche, wobei
- das zweite Signal (S2) ausgegeben wird, wenn wenigstens ein Kriterium für den Übergang von dem zweiten in den ersten Betriebszustand erfüllt ist.

6. System (1) zum Betrieb eines Regeltransformators (10) zur Kopplung von zwei elektrischen Energienetzen (2), umfassend
- einen Regeltransformator (10) mit wenigstens einer ersten Regelwicklung (12) auf einer Oberspannungsseite (15) und mit wenigstens einer zweiten Regelwicklung (14) auf einer Unterspannungsseite (13),
- einen ersten Laststufenschalter (16) zur Umschaltung zwischen wenigstens zwei Wicklungsanzapfungen (N₁, ...N_{J}, ..., N_{N}) der ersten Regelwicklung (12),
- einen zweiten Laststufenschalter (17) zur Umschaltung zwischen wenigstens zwei Wicklungsanzapfungen (N₁, ...N_{J}, ..., N_{N}) der zweiten Regelwicklung (14),
- eine Ableitung (18), die an der Unterspannungsseite (15) des Regeltransformators (10) angeschlossen ist,
- eine Steuereinheit (20),
wobei die Steuereinheit (20) dazu ausgebildet ist,
- ein erstes Signal (S1) zu erfassen, das einen Übergang von einem ersten Betriebszustand in einen zweiten Betriebszustand auf der Unterspannungsseite (15) des Regeltransformators (10) anzeigt,
- den zweiten Laststufenschalter (17) in Abhängigkeit von dem ersten Signal (S1) derart zu betätigen, dass der zweite Laststufenschalter (17) von einer ersten Betriebsposition in eine zweite Betriebsposition, in der die an der Ableitung (18) anliegende Spannung einen minimalen Wert nahe Null einnimmt, umgeschaltet wird
wobei das System eine Auswerteeinheit (21) mit wenigstens einem Sensor (22) umfasst, wobei
- der wenigstens eine Sensor (22) dazu ausgebildet ist, wenigstens eine Kenngröße zu erfassen, die maßgeblich ist für eine Änderung des Betriebszustandes auf der Unterspannungsseite (15) des Regeltransformators (10),
- die Auswerteeinheit (21) dazu ausgebildet ist, das erste Signal (S1) an die Steuereinheit (20) zu übermitteln, wenn wenigstens ein Kriterium für den Übergang von dem ersten in den zweiten Betriebszustand erfüllt ist.

7. System (1) nach dem vorherigen Anspruch, umfassend weiterhin
- ein Schaltelement (19), das parallel zu dem zweiten Laststufenschalter (17) an der Unterspannungsseite (15) angeordnet ist und eine geöffnete Position und eine geschlossene Position einnehmen kann,
wobei die Steuereinheit (20) außerdem dazu ausgebildet ist,
- den zweiten Laststufenschalter (17) in Abhängigkeit von dem ersten Signal (S1) derart zu betätigen, dass der zweite Laststufenschalter (17) von einer dritten Betriebsposition in eine erste Betriebsposition, in der die an der Ableitung (18) anliegende Spannung einen maximalen Wert einnimmt, umgeschaltet wird,
- das Schaltelement (19) zu öffnen, sodass ein Strom von der Ableitung (18) auf den zweiten Laststufenschalter (17) kommutiert wird,
- den zweiten Laststufenschalter (17) derart zu betätigen, dass der zweite Laststufenstufenschalter (17) von der ersten Betriebsposition in eine zweite Betriebsposition, in der die an der Ableitung (18) anliegende Spannung einen minimalen Wert nahe Null einnimmt, umgeschaltet wird.

8. System (1) nach einem vorherigen Ansprüche 6 oder 7, wobei die Steuereinheit (20) dazu ausgebildet ist,
- ein zweites Signal (S2) zu erfassen, das einen bevorstehenden Übergang von dem zweiten Betriebszustand in den ersten Betriebszustand auf der Unterspannungsseite (15) des Regeltransformators (10) beschreibt,
- den zweiten Laststufenschalter (17) in Abhängigkeit von dem zweiten Signal (S2) derart zu betätigen, dass der zweite Laststufenschalter (17) von der zweiten Betriebsposition zurück in die erste Betriebsposition umgeschaltet wird.

9. System (1) nach Anspruch 7 und 8, wobei die Steuereinheit (20) außerdem dazu ausgebildet ist,
- das Schaltelement (19) zu schließen,
- den zweiten Laststufenschalter (17) derart zu betätigen, dass der zweite Laststufenschalter (17) von der ersten Betriebsposition in die dritte Betriebsposition umgeschaltet wird.

10. System (1) nach einem der vorherigen Ansprüche 6 bis 9, wobei an der Unterspannungsseite (15) des Regeltransformators (10) über die Ableitung (18) eine erneuerbare Energieanlage angeschlossen ist,
- in dem ersten Betriebszustand auf der Unterspannungsseite (15) des Regeltransformators (10) die erneuerbare Energieanlage elektrische Energie erzeugt,
- in dem zweiten Betriebszustand auf der Unterspannungsseite (15) des Regeltransformators (10) die erneuerbare Energieanlage keine elektrische Energie erzeugt.

11. System (1) nach einem der vorherigen Ansprüche 6 bis 9, wobei an der Unterspannungsseite (15) des Regeltransformators (10) über die Ableitung (18) ein Verbraucher angeschlossen ist,
- in dem ersten Betriebszustand auf der Unterspannungsseite (15) des Regeltransformators (10) der Verbraucher Energie bezieht,
- in dem zweiten Betriebszustand auf der Unterspannungsseite (15) des Regeltransformators (10) der Verbraucher keine Energie bezieht.

12. System (1) nach einem der vorherigen Ansprüche 6 bis 11, wobei
- die Auswerteeinheit (21) dazu ausgebildet ist das zweite Signal (S2) an die Steuereinheit (20) zu übermitteln, wenn wenigstens ein Kriterium für den Übergang von dem zweiten in den ersten Betriebszustand erfüllt ist.

13. System (1) nach einem der vorherigen Ansprüche 6 bis 12, wobei das erste und/oder zweite Signal (S1, S2) als zeitgesteuerte Signale ausgebildet sind.

14. System (1) nach einem der vorherigen Ansprüche 6 bis 13, wobei der Regeltransformator (10) eine Tertiärwicklung (30) umfasst, die zur eigenständigen Stromversorgung von elektrischen Betriebsmitteln unabhängig von dem Betriebszustand auf der Unterspannungsseite (15) des Regeltransformators (10) ausgebildet ist.

## Claims

1. A method for operating a regulating transformer (10) for coupling two electrical power grids (2, 3), with a system (1) comprising
- a regulating transformer (10) having at least a first tap winding (12) on a high-voltage side (13) and at least a second tap winding (14) on a low-voltage side (15),
- a first on-load tap-changer (16) for switching between at least two winding taps (N₁, ...N_{J}, ..., N_{N}) of the first tap winding (12),
- a second on-load tap-changer (17) for switching between at least two winding taps (N₁, ...N_{J}, ..., N_{N}) of the second tap winding (14),
- a take-off lead (18) connected to the low-voltage side (15),
wherein the method comprises the following steps:
- detecting at least one parameter that is indicative of a change in an operating state on the low-voltage side (13) of the regulating transformer (10),
- detecting a first signal (S1) that indicates an impending transition from a first operating state to a second operating state on the low-voltage side (15) of the regulating transformer (10), wherein the first signal (S1) is output when at least one criterion for the transition from the first to the second operating state is met; the method is **characterized by**
- operating the second on-load tap-changer (17) such that the second on-load tap-changer (17) is switched from a first operating position to a second operating position in which the voltage across the take-off lead (18) assumes a minimum value close to zero.

2. A method for operating a regulating transformer (10) for coupling two electrical power grids (2), comprising a system (1) comprising
- a regulating transformer (10) with at least a first tap winding (12) on a high-voltage side (13) and at least a second tap winding (14) on a low-voltage side (15),
- a first on-load tap-changer (16) for switching between at least two winding taps (N₁, ...N_{J}, ..., N_{N}) of the first tap winding (12),
- a second on-load tap-changer (17) for switching between at least two winding taps (N₁ , ...N_{J} , ..., N_{N} ) of the second tap winding (14),
- a take-off lead (18) connected to the low-voltage side (15),
- a switching element (19) arranged in parallel with the second on-load tap-changer (17) on the low-voltage side (15) and capable of assuming an open position and a closed position ,
wherein the method comprises the following steps:
- Detecting at least one parameter that is indicative of a change in an operating state on the low-voltage side (13) of the regulating transformer (10),
- detecting a first signal (S1) that indicates an impending transition from a first operating state to a second operating state on the low-voltage side (15) of the regulating transformer (10), wherein the first signal (S1) is output when at least one criterion for the transition from the first to the second operating state is met,
- Actuating the second on-load tap-changer (17) such that the second on-load tap-changer (17) is switched from a third operating position to a first operating position, in which the voltage across the take-off lead (18) preferably reaches a maximum value,
- opening the switching element (19) and commutating a current from the take-off lead to the second on-load tap-changer (17),
- operating the second on-load tap-changer (17) such that the second on-load tap-changer (17) is switched from the first operating position to a second operating position, in which the voltage across the take-off lead (18) assumes a minimum value close to zero .

3. A method according to claim 1 or 2, wherein the method comprises the following additional steps:
- detecting a second signal (S2) indicating an impending transition from the second operating state to the first operating state on the low-voltage side (17) of the regulating transformer (10),
- operating the second on-load tap-changer (17) such that the second on-load tap-changer (17) is switched from the second operating position back to the first operating position .

4. The method according to claims 2 and 3, wherein the method comprises the following additional steps:
- closing the switching element (19),
- operating the second on-load tap-changer (17) such that the second on-load tap-changer (17) is switched from the first operating position to the third operating position .

5. A method according to any one of the preceding claims, wherein
- the second signal (S2) is output when at least one criterion for the transition from the second to the first operating state is met.

6. A system (1) for operating a regulating transformer (10) for coupling two electrical power grids (2), comprising
- a regulating transformer (10) with at least a first tap winding (12) on a high-voltage side (15) and with at least a second tap winding (14) on a low-voltage side (13),
- a first on-load tap-changer (16) for switching between at least two winding taps (N₁, ...N_{J}, ..., N_{N}) of the first tap winding (12),
- a second on-load tap-changer (17) for switching between at least two winding taps (N₁, ...N_{J}, ..., N_{N}) of the second tap winding (14),
- a take-off lead (18) connected to the low-voltage side (15) of the regulating transformer (10),
- a control unit (20),
wherein the control unit (20) is configured to
- detect a first signal (S1) , which indicates a transition from a first operating state to a second operating state on the low-voltage side (15) of the regulating transformer (10),
- to actuate the second on-load tap-changer (17) in response to the first signal (S1) such that the second on-load tap-changer (17) is switched from a first operating position to a second operating position, in which the voltage across the take-off lead (18) assumes a minimum value close to zero,
wherein the system comprises an evaluation unit (21) with at least one sensor (22), wherein
- the at least one sensor (22) is configured to detect at least one parameter that is decisive for a change in the operating state on the low-voltage side (15) of the regulating transformer (10),
- the evaluation unit (21) is configured to transmit the first signal (S1) to the control unit (20) when at least one criterion for the transition from the first to the second operating state is met.

7. A system (1) according to the preceding claim, further comprising
- a switching element (19) arranged in parallel with the second on-load tap-changer (17) on the low-voltage side (15) and capable of assuming an open position and a closed position ,
wherein the control unit (20) is further configured to
- actuate the second on-load tap-changer (17) in response to the first signal (S1) such that the second on-load tap-changer (17) is switched from a third operating position to a first operating position, in which the voltage across the take-off lead (18) reaches a maximum value,
- to open the switching element (19) so that current is commutated from the take-off lead (18) to the second on-load tap-changer (17),
- actuating the second on-load tap-changer (17) such that the second on-load tap-changer (17) is switched from the first operating position to a second operating position, in which the voltage across the take-off lead (18) assumes a minimum value close to zero.

8. A system (1) according to any one of claims 6 or 7, wherein the control unit (20) is configured to
- detect a second signal (S2) that describes an impending transition from the second operating state to the first operating state on the low-voltage side (15) of the regulating transformer (10),
- actuate the second on-load tap-changer (17) in response to the second signal (S2) such that the second on-load tap-changer (17) is switched from the second operating position back to the first operating position.

9. System (1) according to claims 7 and 8, wherein the control unit (20) is further configured to
- close the switching element (19),
- to actuate the second on-load tap-changer (17) in such a way that the second on-load tap-changer (17) is switched from the first operating position to the third operating position.

10. System (1) according to any one of the preceding claims 6 through 9, wherein a renewable energy system is connected to the low-voltage side (15) of the regulating transformer (10) via the take-off lead (18),
- in the first operating state, the renewable energy system generates electrical energy on the low-voltage side (15) of the regulating transformer (10),
- in the second operating state, the renewable energy system does not generate electrical energy on the low-voltage side (15) of the regulating transformer (10).

11. A system (1) according to any one of claims 6 through 9, wherein a load is connected to the low-voltage side (15) of the regulating transformer (10) via the take-off lead (18),
- in the first operating state, the load draws power on the low-voltage side (15) of the regulating transformer (10),
- in the second operating state, the load does not draw power from the low-voltage side (15) of the regulating transformer (10).

12. System (1) according to any one of the preceding claims 6 through 11, wherein
-
- the evaluation unit (21) is configured to transmit the second signal (S2) to the control unit (20) when at least one criterion for the transition from the second to the first operating state is met.

13. System (1) according to any one of the preceding claims 6 through 12, wherein the first and/or second signal (S1, S2) are configured as time-controlled signals.

14. A system (1) according to any one of the preceding claims 6 through 13, wherein the regulating transformer (10) comprises a tertiary winding (30) , which is configured to independently supply power to electrical equipment on the low-voltage side (15) of the regulating transformer (10), regardless of the operating state.

## Revendications

1. Procédé de fonctionnement d'un transformateur de régulation (10) destiné à coupler deux réseaux électriques (2, 3), comprenant un système (1) comprenant
- un transformateur de régulation (10) comportant au moins un premier enroulement de régulation (12) du côté haute tension (13) et au moins un deuxième enroulement de régulation (14) du côté basse tension (15),
- un premier commutateur de prise de charge (16) destiné à la commutation entre au moins deux prises d'enroulement (N₁, ...N_{J}, ..., N_{N}) du premier enroulement de régulation (12),
- un deuxième commutateur de prise en charge (17) permettant de commuter entre au moins deux prises d'enroulement (N₁ , ...N_{J} , ..., N_{N} ) du deuxième enroulement de régulation (14),
- une dérivation (18) raccordée au côté basse tension (15),
le procédé comprenant les étapes suivantes :
- la détection d'au moins une grandeur caractéristique déterminante pour un changement d'état de fonctionnement du côté basse tension (13) du transformateur de régulation (10),
- la détection d'un premier signal (S1) indiquant une transition imminente d'un premier état de fonctionnement vers un deuxième état de fonctionnement du côté basse tension (15) du transformateur de régulation (10), le premier signal (S1) étant émis lorsqu'au moins un critère de transition du premier vers le deuxième état de fonctionnement est rempli, le procédé étant **caractérisé par**
- l'actionnement du deuxième commutateur de prise de charge (17) de telle sorte qu' le deuxième commutateur de prise de charge (17) soit commuté d'une première position de fonctionnement vers une deuxième position de fonctionnement, dans laquelle la tension appliquée à la dérivation (18) prend une valeur minimale proche de zéro.

2. Procédé de fonctionnement d'un transformateur de régulation (10) destiné au couplage de deux réseaux électriques (2), comprenant un système (1) comportant
- un transformateur de régulation (10) comportant au moins un premier enroulement de régulation (12) du côté haute tension (13) et au moins un deuxième enroulement de régulation (14) du côté basse tension (15),
- un premier commutateur de prise de charge (16) destiné à la commutation entre au moins deux prises d'enroulement (N₁ , ...N_{J} , ..., N_{N} ) du premier enroulement de régulation (12),
- un deuxième commutateur de prise sous charge (17) permettant de commuter entre au moins deux prises d'enroulement (N₁ , ...N_{J} , ..., N_{N} ) du deuxième enroulement de régulation (14),
- un parafoudre (18) raccordé au côté basse tension (15),
- un élément de commutation (19) disposé en parallèle avec le deuxième commutateur de prise de charge (17) du côté basse tension (15) et pouvant prendre une position ouverte et une position fermée ,
le procédé comprenant les étapes suivantes :
- la détection d'au moins une grandeur caractéristique déterminante pour un changement d'état de fonctionnement du côté basse tension (13) du transformateur de régulation (10),
- la détection d'un premier signal (S1) indiquant une transition imminente d'un premier état de fonctionnement vers un deuxième état de fonctionnement du côté basse tension (15) du transformateur de régulation (10), le premier signal (S1) étant émis lorsqu'au moins un critère de transition du premier vers le deuxième état de fonctionnement est rempli,
- actionnement du deuxième commutateur de prise de charge (17) de telle sorte que celui-ci passe d'une troisième position de fonctionnement à une première position de fonctionnement, dans laquelle la tension appliquée à la dérivation (18) prend de préférence une valeur maximale,
- ouverture de l'élément de commutation (19) et commutation d'un courant provenant de la dérivation vers le deuxième commutateur de charge à plusieurs niveaux (17),
- actionnement du deuxième commutateur de niveau de charge (17) de telle sorte que le deuxième commutateur de niveau de charge (17) soit commuté de la première position de fonctionnement vers une deuxième position de fonctionnement, dans laquelle la tension appliquée à la dérivation (18) prend une valeur minimale proche de zéro .

3. Procédé selon la revendication 1 ou 2, le procédé comprenant les étapes supplémentaires suivantes :
- la détection d'un deuxième signal (S2) indiquant une transition imminente du deuxième état de fonctionnement vers le premier état de fonctionnement du côté basse tension (17) du transformateur de régulation (10),
- actionner le deuxième commutateur de prise de charge (17) de telle sorte que le deuxième commutateur de prise de charge (17) soit commuté de la deuxième position de fonctionnement vers la première position de fonctionnement .

4. Procédé selon les revendications 2 et 3, le procédé comprenant les étapes supplémentaires suivantes :
- fermer l'élément de commutation (19),
- actionner le deuxième commutateur de niveau de charge (17) de telle sorte que celui-ci passe de la première position de fonctionnement à la troisième position de fonctionnement .

5. Procédé selon l'une des revendications précédentes, dans lequel
- le deuxième signal (S2) est émis lorsqu'au moins un critère de passage du deuxième état de fonctionnement au premier état de fonctionnement est rempli.

6. Système (1) destiné au fonctionnement d'un transformateur de régulation (10) pour le couplage de deux réseaux électriques (2), comprenant
- un transformateur de régulation (10) comportant au moins un premier enroulement de régulation (12) du côté haute tension (15) et au moins un deuxième enroulement de régulation (14) du côté basse tension (13),
- un premier commutateur de prise en charge (16) permettant de commuter entre au moins deux prises d'enroulement (N₁ , ...N_{J} , ..., N_{N} ) du premier enroulement de régulation (12),
- un deuxième commutateur de prise en charge (17) permettant de commuter entre au moins deux prises d'enroulement (N₁ , ...N_{J} , ..., N_{N} ) du deuxième enroulement de régulation (14),
- une dérivation (18) raccordée au côté basse tension (15) du transformateur de régulation (10),
- une unité de commande (20),
l'unité de commande (20) étant conçue pour
- détecter un premier signal (S1) , qui indique un passage d'un premier état de fonctionnement à un deuxième état de fonctionnement du côté basse tension (15) du transformateur de régulation (10),
- d'actionner le deuxième commutateur de prise de charge (17) en fonction du premier signal (S1) de telle sorte que le deuxième commutateur de prise de charge (17) soit commuté d'une première position de fonctionnement à une deuxième position de fonctionnement, dans laquelle la tension appliquée à la dérivation (18) prend une valeur minimale proche de zéro,
le système comprenant une unité d'évaluation (21) dotée d'au moins un capteur (22),
- ledit au moins un capteur (22) est conçu pour détecter au moins une grandeur caractéristique déterminante pour un changement de l'état de fonctionnement du côté basse tension (15) du transformateur de régulation (10),
- l'unité d'évaluation (21) est conçue pour transmettre le premier signal (S1) à l'unité de commande (20) lorsqu'au moins un critère de passage du premier état de fonctionnement au deuxième état de fonctionnement est rempli.

7. Système (1) selon la revendication précédente, comprenant en outre
- un élément de commutation (19) qui est disposé en parallèle avec le deuxième commutateur de prise de charge (17) du côté basse tension (15) et qui peut prendre une position ouverte et une position fermée ,
l'unité de commande (20) étant en outre conçue pour
- actionner le deuxième commutateur de charge (17) en fonction du premier signal (S1) de telle sorte que le deuxième commutateur de charge (17) soit commuté d'une troisième position de fonctionnement vers une première position de fonctionnement, dans laquelle la tension appliquée à la dérivation (18) prend une valeur maximale,
- d'ouvrir l'élément de commutation (19) de manière à ce qu'un courant soit commuté de la dérivation (18) vers le deuxième commutateur de niveau de charge (17),
- actionner le deuxième commutateur de niveau de charge (17) de telle sorte que celui-ci passe de la première position de fonctionnement à une deuxième position de fonctionnement, dans laquelle la tension appliquée à la dérivation (18) prend une valeur minimale proche de zéro,

8. Système (1) selon l'une des revendications 6 ou 7 précédentes, dans lequel l'unité de commande (20) est conçue pour
- détecter un deuxième signal (S2) qui décrit une transition imminente du deuxième état de fonctionnement vers le premier état de fonctionnement du côté basse tension (15) du transformateur de régulation (10),
- actionner le deuxième commutateur de prise de charge (17) en fonction du deuxième signal (S2) de telle sorte que le deuxième commutateur de prise de charge (17) soit commuté de la deuxième position de fonctionnement vers la première position de fonctionnement.

9. Système (1) selon les revendications 7 et 8, dans lequel l'unité de commande (20) est en outre conçue pour
- fermer l'élément de commutation (19),
- actionner le deuxième commutateur de charge à gradins (17) de telle sorte que celui-ci passe de la première position de fonctionnement à la troisième position de fonctionnement.

10. Système (1) selon l'une des revendications précédentes 6 à 9, dans lequel une installation d'énergie renouvelable est raccordée, du côté basse tension (15) du transformateur de régulation (10), via la dérivation (18),
- dans le premier état de fonctionnement, l'installation d'énergie renouvelable produit de l'énergie électrique du côté basse tension (15) du transformateur de régulation (10),
- dans le deuxième état de fonctionnement, du côté basse tension (15) du transformateur de régulation (10), l'installation d'énergie renouvelable ne produit pas d'énergie électrique.

11. Système (1) selon l'une des revendications 6 à 9 précédentes, dans lequel un consommateur est raccordé, du côté basse tension (15) du transformateur de régulation (10), via la dérivation (18),
- dans le premier état de fonctionnement, du côté basse tension (15) du transformateur de régulation (10), le consommateur prélève de l'énergie,
- dans le deuxième état de fonctionnement, le consommateur ne prélève pas d'énergie du côté basse tension (15) du transformateur de régulation (10).

12. Système (1) selon l'une des revendications 6 à 11 précédentes, dans lequel
-
- l'unité d'évaluation (21) est conçue pour transmettre le deuxième signal (S2) à l'unité de commande (20) lorsqu'au moins un critère de passage du deuxième état de fonctionnement au premier état de fonctionnement est rempli.

13. Système (1) selon l'une des revendications précédentes 6 à 12, dans lequel le premier et/ou le deuxième signal (S1, S2) sont conçus comme des signaux temporisés.

14. Système (1) selon l'une des revendications précédentes 6 à 13, dans lequel le transformateur de régulation (10) comprend un enroulement tertiaire (30) , qui est conçu pour l'alimentation électrique autonome d'équipements électriques, indépendamment de l'état de fonctionnement, du côté basse tension (15) du transformateur de régulation (10).
